# EUROPEAN PATENT SPECIFICATION

(11) **EP 2 824 372 B1**
(45) Date of publication and mention of the grant of the patent: **01.11.2017**
(21) Application number: 13176414.4
(22) Date of filing: 12.07.2013
(51) Int. Cl.: F16K 11/074

(54) **Central fixation valve**
Ventil mit zentraler Befestigung
Soupape de fixation centrale

(43) Date of publication of application: 14.01.2015
(73) Proprietor: WABCO Europe BVBA, 1170 Brussels (BE)
(72) Inventor: Harla, Krzysztof, 55-200 Olawa (PL); Repela, Marek, 53-031 Wroclaw (PL); Haverkamp, Michael, 30455 Hannover (DE); Leszczuk, Agnieszka, 51-678 Wroclaw (PL)
(74) Representative: Eisenführ Speiser

(56) References cited:
- EP-A1- 2 806 194
- WO-A1-2012/173908
- US-A1- 2011 266 355
- US-A1- 2012 049 096

## Description

The invention relates to a pneumatic valve device for passing air between the valve and a utilization element comprising a valve housing and a rotatable valve discs arrangement according to the preamble part of claim 1.

Pneumatic valves are one of an array of components responsible for controlling the pressure, rate and amount of air as it moves through a pneumatic system. Pneumatic systems, which depend on the force of compressed air to transmit power, can be found in countless industrial applications, from pneumatic pressure power tools to diesel engines. Pneumatic systems are commonly used as leveling valve to regulate the vertical clearance of a vehicle such a truck or other utility vehicle with respect to ground level. A corresponding appliance will provide a height control system for setting the distance between axis of a vehicle and its mounting. Depending on the load situation of the vehicle or depending upon dynamic utilization elements such as pneumatic suspension bellow of the vehicle will be forced for getting the required distance of the axis to the ground level.

Many functional directional pneumatic control valves are classified based on the number of entry and exit ports they possess, the number of flow paths they create, and the mechanism by which ports are opened and closed. Depending on number of entry and exit the houses of the valves will be adjust for getting a space saving, situation optimized and functional system. This adjusting also includes the optimized process technology and the optimized handling of such a pneumatic valve concerning the buildup. For this purpose a lot of different designs are described, one example of such a valve is given in EP 2 806 194 A1. For example in EP1986874 a valve device is disclosed for manually varying the level of an air-sprung vehicle, having a housing and having a central operating element which is movable relative to the housing by means of the actuation of a lever in which valve device the operating element can be adjusted by means of a rotational movement into at least one lowering characterized in that the operating element can be latched, to prevent a rotational movement, at least in the lowering position by means of a mechanical arresting device, which acts between the operating element and the housing.

In US 6450 201 another type of valve is disclosed, a multiway rotary valve comprising a centrally disposed bolt, a planar clearance between the first and the second valve elements being adjustable by the bolt, the bolt defining a rotational axis of the second valve element. The multiway rotary disc, wherein the first and the second valve element are rotatable relative to each other, is provided for being not limited in use in power assisted steering systems and for a easily manufacturing the valve elements.

In WO 2010/089089 leveling valve of the kind mentioned in the introduction is disclosed comprising a valve body and a valve discs arrangement, wherein the first and the second disc being concentrically to each other, contacting each other along respective contact surface and being rotatable with respect to each other such that the valve discs arrangement is switchable between multiple switching positions, wherein the main character of the development by the reduction of sealing elements is to achieve process reliability and easy manufacture processes.

The present invention is based on the object to develop such a pneumatic valve device of the types mentioned above having also a rotational movement but focuses on different aspects. The major object of the invention is to provide a pneumatic valve device for passing air between the valve and a utilization element with an optimized assembly comprising a reduction of necessary parts. It is still a further object to decrease the assembly time, to simplify the manufacture, to increase reliability of pneumatic valve devices and also to cut costs of manufacture processes.

In relation to the pneumatic valve device for passing air between the valve and a utilization element comprising a valve housing and a rotatable valve discs arrangement the object of the invention is achieved by a pneumatic valve device as mentioned in the introduction and according to the invention further providing the features of the characterizing part of claim 1.

Thus, the invention relates to a pneumatic valve device comprising a valve housing and a rotatable discs arrangement for passing air between the valve and utilization elements.

According to the invention
- the valve housing has a shaft and a body, wherein a rotatable discs arrangement has at least two valve discs and wherein the first rotatable disc is fixed to the shaft and the second rotatable disc is fixed to the body and wherein the shaft and the body are rotatable to each other with respect to the rotational direction of the rotatable discs arrangement, and
- the body and the shaft are movable relative into the other and have a plugged up end position, and
- the shaft and the body are hold by a single mechanical fastener.

Thus basically, the invention provides a pneumatic valve device wherein the valve housing has a shaft and a body movable relative into the other having a plugged up end situation and wherein the shaft and the body are hold by a single mechanical fastener.

The invention recognized that is desirable to simplifying the construction of a pneumatic valve device. Thus, the invention provides an inventive concept of valve housing without using any additional parts like cover or so. The valve housing is the shaping device with functional character. The inventive valve device adapts a shaft and a body as the valve housing being closed by using a mechanical fastener. This mechanical fastener is going through the center of the valve, fixing the shaft and the house. This inventive concept presents new aspects for having a single mechanical fastener. In this case the single mechanical fastener is fixing the shaft to the body, eliminates the cover for fixing the shaft and eliminates the cover itself. The drawback of the commercial used cover of a pneumatic valve is the need of lots of screw which are necessary for fixing the cover to the body mainly placed outside of the valve. The new pneumatic valve device found a solution neither needing a lot of screws nor using elaborate and expensive production processes like ultrasonic welding which might be also possible for replacing the amount of screws.

Requirements for the aforementioned single mechanical fastener is the offering of constructive elements like claw in the shaft and the body for the easy moving and adjusting of the body and the shaft, wherein the moving is forced to the end position and will be sealed by additional sealing. The claws can be act as guide bars for the moving of the housing elements into each other.

The invention recognized that the assembly time will be significantly decreased by using a single mechanical fastener because of the reduced parts for fixing the valve housing. Additionally less constructive parts are needed for assembly, which offers the opportunity to design a smaller and compact valve device with increased functional character.

According to the invention the rotatable discs arrangement has at least two valve discs wherein the first rotatable disc is fixed to the shaft and the second rotatable disc is fixed to the body. Instead of the state of art in this invention the discs are fixed to the parts of the housing. This is a new constructive character. For achieving different switching positions regulating the vertical clearance the inventive concept provides a shaft and a body being rotatable to each other with respect to the rotational direction of the rotatable discs arrangement. Enabling the different switching position, wherein a source of pressured air or the exhaust port are in fluid communication or being blocked, there must be a plugged up pneumatic valve device. According to the invention the shaft and the body are also movable relative into the other and have a plugged up end position. This plugged up end position offers the possibility for eliminating the cover and additional clamping elements without an increased amount of sealing elements.

These and further developed configurations of the invention are further outlined in the dependent claims. Thereby, the mentioned advantages of the proposed concept are even more improved. For each feature of the dependent claims it is claimed independent protection independent from all other features of this disclosure.

In a preferred development it has been recognized to be convenience when the shaft and the body are held only by a single central mechanical fastener. This feature offers the opportunity for getting a very short assembly time. Requirements for the aforementioned constructive elements like claw in the shaft and the body can be designed symmetrically in the outer region of the valve housing offering of for the easy moving and adjusting of the body and the shaft, wherein the moving is forced to the end position. The single central mechanical fastener reduces sliding of the housing elements and fixes them together with a constant compacting pressure. The fixing is to be understood that parts, shaft and body will hold together without moving axially after getting their plugged end position which can be realized by a single central mechanical fastener.

In a preferred development the single mechanical fastener defines the rotatable axis of the rotary disc system. Providing a leveling valve device with valve discs arrangement requires switching positions. The flow cross section of the valve discs are adapted to provide flow cross section in a respective flow path between the source or the exhaust port depending on the switching position, the angle of ratio between the two valve discs.

Depending on the switching position improved functionality will be achieved by the central single mechanical fastener having a minimal tolerance because of the fixed rotatable axis of the discs. Another advantage is the opportunity to build up a compact valve device because of the space-saving concept. This means fewer parts and a high reliability for assembling a pneumatic valve.

In a preferred development the single mechanical fastener is fixed by the boss of the shaft and with external fastening elements on the bottom of the body, at least one fastening element like an external metal clip or external nut. The lachting of the single mechanical fastener in a metal clip or nut of that preferred development offers a very comfortable assembly. The housing element, the shaft and the body will be guided by claw avoiding an axial moving and the plug mechanism offers a very easy lachting of the housing elements in the axial movements, fixed on one side by the support device part of the valve shaft and on the other side by a metal clamp arrested at the lower side of the valve body but still rotatable par example by a lever arm.

In a preferred development the spring of the device is positioned in between the first valve disc and the boss of the shaft. For getting the tolerance compensation between the shaft and the body with the respective discs a spring is adapted. This spring offers the opportunity for the discs arrangement being axial movably. The spring also leads to a distribution of the homogeneous contact pressure wherein the danger of tilting and uneven axial load will be minimized.

In a preferred development the single mechanical fastener also integrates the construction element for the lever arm characterized by a pin with a functional head. This feature integrates the lever arm for a pneumatic valve which will be positioned at certain positions. This lever arm can be integrated in the single mechanical fastener being fixed by a small screw and integrated in the shaft body being stuck to the holes of the shaft for having certain position of the leveling valve device by manual acting.

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is intended that the invention may not be limited to the exact form and detail shown and described herein, nor to anything less than the whole of the invention disclosed herein and as claimed hereinafter. Further the features described in the description, the drawing and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality. The wording, "a number of" items, comprises also the number one, i.e. a single item, and further numbers like two, three, four and so forth.

The drawing shows in,
- Fig. 1A: a schematic view of a pneumatic valve device according to a preferred embodiment;
- Fig. 1B: a principal schematic cross section of a pneumatic valve device;
- Fig. 2: a cross sectional view along the axis A of a pneumatic valve device according to Fig. 1;
- Fig. 3A and Fig. 3B: alternative cross sectional views of a pneumatic valve device according to Fig.2;
- Fig. 4: a cross sectional view of a pneumatic valve device according to Fig.1.

For identical or equivalent items or items of identical or equivalent function in the following the some reference marks are used. For corresponding features thus it is referred to the above description.

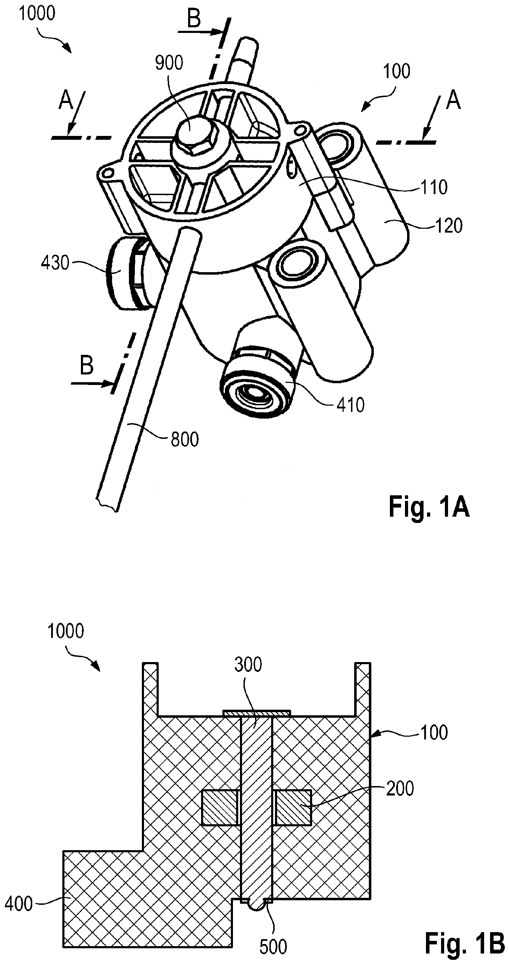

In Fig. 1 a pneumatic valve device 1000 in accordance to a preferred embodiment of the invention a three-way directional valve is shown (visible only two ports). The valve housing 100 is the shaping device with functional character. In the schematic view the valve housing 100 is divided in two parts, the shaft 110 and the body 120. The port of the first utilization element 410 is used to connect the valve to an actuator or another device. The port of the second utilization element of the three-way directional valve (not visible in Fig.1) is connected to an air-flow. The third port is used as a source of pressurized air 430 or an exhaust exit. When the first port and second port are open and the third is closed, air moves through the valve to the device. If the first and third ports are open and the second port is closed, the actuator can vent exhaust. The pneumatic valve 1000 comprises further a lever arm 800 which is fixed by a small screw 900 to a shaft. The axis A and B are drawn in the pneumatic valve device 1000 for identify the cross sectional views of the next figures.

In Fig. 1B a pneumatic valve device 1000 for passing air between the valve and a utilization element 400 comprising a valve housing 100 and a rotatable discs arrangement 200 is depicted. A single mechanical fastener 300 is adapted for fastening the valve housing and is fixed with at least one fastening element 500.

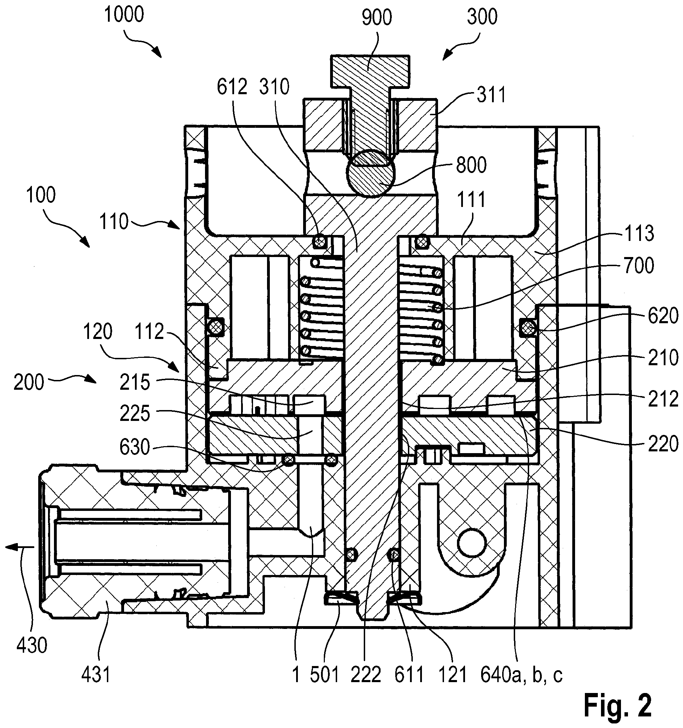

In Fig. 2 a pneumatic valve device 1000 in accordance with a preferred embodiment of the invention is depicted. The pneumatic valve device 1000 comprises a valve housing 100 and a valve discs arrangement 200 for directing air between a plurality of utilization elements and either a source of pressurized air 430 or an exhaust port.

The valve discs arrangement 200 comprises a first valve disc 210 and a second valve disc 220. The first and the second valve disc, 210 and 220, of the valve discs arrangement 200 comprise respective flow portions forming flow paths for guiding the air through the valve. The valve housing 100 comprises a rotatable shaft 110 and a body 120. The first disc 210 is non-rotatable mounted to the shaft 110 and the second disc 220 is non-rotatable mounted to the body 120.

The pneumatic valve device 1000 shows a single mechanical fastener 300 in the axis of pivot point, in this preferred embodiment in form of a pin with head 310. A single mechanical fastener 300 is a device that holds two or more objects together. A fastener can be pin, a bolt or a screw as well a fastener with head. The illustrated head 311 integrates in this case a lever arm 800 for manual acting which will be fixed by a small screw 900. The lever arm 800 can be arrested in the shaft 110 with two position rotated by 90° degrees. Upon actuation of the lever 800 the rotatable shaft 110 will be rotated relative to the body 120. The pin with head 310 is fixed on one side by head 311 to the boss 111 of the shaft 110 and on the other side at the bottom of the body 121 with a mounted metal clip 501 to fasten the shaft 110 and the body 120 together. The pin with head 310 clicks into the metal clip 501. The head 311 touches the surface of the boss 111 and the bottom surface of the through boring of the body. The pin with head will be surrounded by spring 700 as a resilient means which is positioned in between the first valve disc 210 and the boss 111 of the shaft 110. This spring is located and effective to push the discs arrangement 200 towards the body 120 and the shaft 110 in order to establish the sealing, preferably an air tight relationship between the valve discs arrangement 200 and the housing 100.

The valve discs arrangement 200 is pivoted with an air gap 212 between the pin with head and the first disc 210 and an air gap 222 between the pin with head 310 and the second disc 222.

The ring elements 611 and 612 act like a soil proofing of the pin with head 310 in the valve housing 100, especially the valve body 120. The ring element 612 is adapted to the boss 111 of the shaft 110 next to the head 311 and the ring element 611 is adapted in the body. An airtight closure of this preferred embodiment with the inventive pin with head is guaranteed. Sealing elements are functional integrated in the pneumatic valve device 1000, for example an adapted ring element of shaft 620 between shaft and body, an adapted sealing element 630 between the second disc 220 and the body 120 the adapted sealing elements 640 a, b and c for the sealing between the first disc 210 and the second disc 220.

The body 110 shows an air supply support 1. The air supply support 1 is an air tight sealing contact with the second valve disc 120 and in fluid communication with air passage 225 of the second valve disc 220, also with air passage/flow portion 215 of the first disc 210 depending on the rotatable position The air supply support 1 also comprises a connecting port 431 adapted for connection to a source of pressurized air 430.

In this preferred embodiment the shaft 110 and the body 120 have clearance / guiding parts 113 such in that way that they are movable relative into the other and have a plugged up end position. The claws 112 of the shaft 110 are responsible for the mounting of the first disc 210 to the shaft 110 ensuring in that the first disc 210 is driven by rotation of the shaft 110.

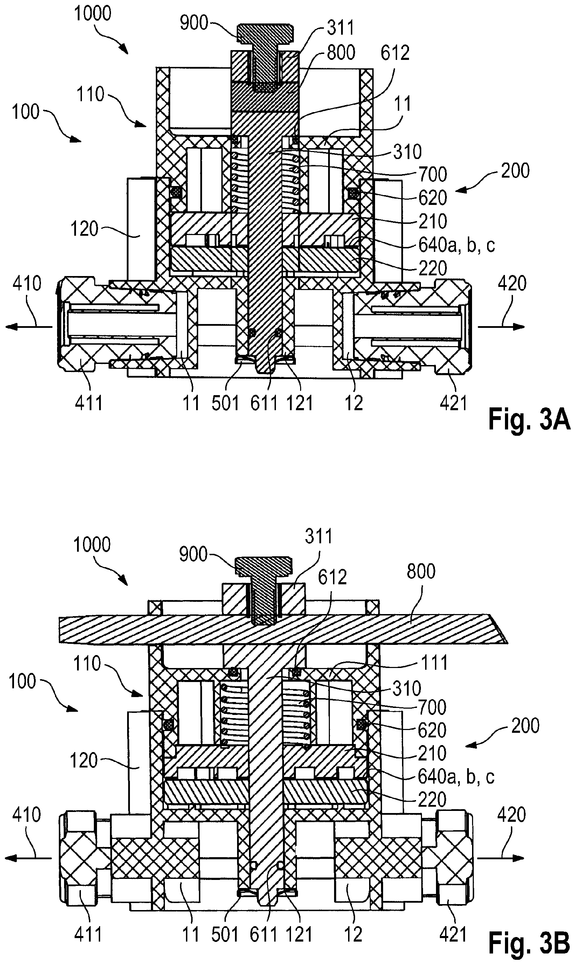

In Fig. 3A and Fig. 3B the similar pneumatic valve 1000 of Fig. 2 is shown depicting other cross sections of the valve with respect to Fig. 2. For corresponding features thus it is referred to the above description, only new features are depicted.

In Fig. 3A a multiple stepped section technical drawing shows the two additional ports of a first utilization element 410 and a second utilization element 420 and their functionality. The body 120 of the valve housing 100 comprises a first fluid cannel 11 at the end of which there is located a connection port 411 for connecting the pneumatic valve device 1000 and in particular the first fluid channel 11 to the first utilization element 410 of a vehicle. Further the body 120 comprises a second fluid channel 12. At the end of the second fluid channel 12 there is located a connection port 421 for connecting the pneumatic valve device 1000 to a second utilization element 420. Utilization elements 410 and 420 for example may be pneumatic suspension bellows of a truck vehicle, wherein the first utilization element 410 might be the right side suspension bellow of a vehicle whereas the second utilization element 420 might be the left side suspension bellow of the vehicle or vice versa. The pin with head 310 integrates a lever arm 800 in the head 311 wherein the fixing of the lever arm 800 by a small screw 900 is now clearly seen.

The valve discs arrangement 200 comprises a first valve disc 210 and a second valve disc 220. The first and the second valve disc, 210 and 220, of the valve discs arrangement 200 comprise respective flow portions forming flow paths for guiding the air through the valve. The valve housing 100 comprises a rotatable shaft 110 and a body 120. The first disc 210 is non-rotatable mounted to the shaft 110 and the second disc 220 is non-rotatable mounted to the body 120.

The pin with head 310 is fixed on one side by head 311 to the boss 111 of the shaft 110 and on the other side at the bottom of the body 121 with a mounted metal clip 501 to fasten the shaft 110 and the body 120 together. The pin with head 310 clicks into the metal clip 501. The head 311 touches the surface of the boss 111 and the bottom surface of the through boring of the body. The pin with head will be surrounded by spring 700 as a resilient means which is positioned in between the first valve disc 210 and the boss 111 of the shaft 110.

The ring elements 611 and 612 act like a soil proofing of the pin with head 310 in the valve housing 100, especially the valve body 120. The ring element 612 is adapted to the boss 111 of the shaft 110 next to the head 311 and the ring element 611 is adapted in the body 120. An airtight closure of this preferred embodiment with the inventive pin with head is guaranteed. Sealing elements are functional integrated in the pneumatic valve device 1000, an adapted ring element of shaft 620 between shaft and body and adapted sealing elements 640 a, b and c for the sealing between the first disc 210 and the second disc 220.

In Fig. 3B shows a multiple stepped section technical drawing through the center of the pneumatic valve along the axis B. The two additional ports of a first utilization element 410 and a second utilization element 420 with their connection port 411 and 421 are visible. The integrated lever arm is led through the shaft 110 on two sides and through the pin with head 310 wherein a screw 900 is integrated in the head 311 for fixing the lever arm 800. The pin with head 310 is depicted in this point of view in the axis of pivot point working as a fixed pivotal point for the discs arrangement 200.

The valve discs arrangement 200 comprises a first valve disc 210 and a second valve disc 220. The first and the second valve disc, 210 and 220, of the valve discs arrangement 200 comprise respective flow portions forming flow paths for guiding the air through the valve. The valve housing 100 comprises a rotatable shaft 110 and a body 120. The first disc 210 is non-rotatable mounted to the shaft 110 and the second disc 220 is non-rotatable mounted to the body 120.

The pin with head 310 is fixed on one side by head 311 to the boss 111 of the shaft 110 and on the other side at the bottom of the body 121 with a mounted metal clip 501 to fasten the shaft 110 and the body 120 together. The pin with head 310 clicks into the metal clip 501. The head 311 touches the surface of the boss 111 and the bottom surface of the through boring of the body. The pin with head will be surrounded by spring 700 as a resilient means which is positioned in between the first valve disc 210 and the boss 111 of the shaft 110.

The ring elements 611 and 612 act like a soil proofing of the pin with head 310 in the valve housing 100, especially the valve body 120. The ring element 612 is adapted to the boss 111 of the shaft 110 next to the head 311 and the ring element 611 is adapted in the body 120. An airtight closure of this preferred embodiment with the inventive pin with head is guaranteed. Sealing elements are functional integrated in the pneumatic valve device 1000, an adapted ring element of shaft 620 between shaft and body and adapted sealing elements 640 a, b and c for the sealing between the first disc 210 and the second disc 220.

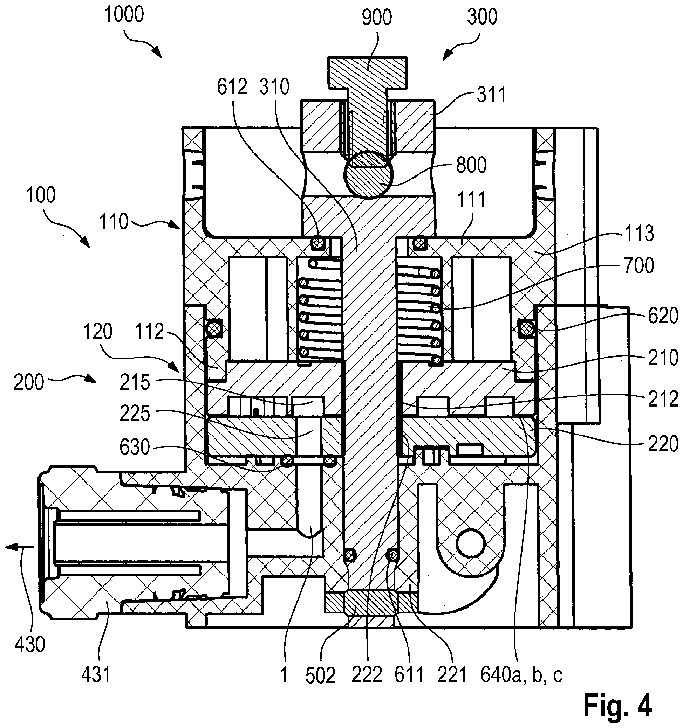

In Fig. 4 a pneumatic valve device 1000 in accordance with a preferred embodiment of the invention is depicted. In this preferred embodiment the single mechanical fastener 300 is replaced by an external thread bolt 320. The illustrated head 311 integrates in this case a lever arm 800 for manual acting which will be fixed by a small screw 900. The pneumatic valve device 1000 comprises a valve housing 100 showing a rotatable shaft 110 and a body 120 and a valve discs arrangement 200 for directing air between a plurality of utilization elements and either a source of pressurized air 430 or an exhaust port.

The external thread bolt 320 is fixed on one side by functional head 311 to the boss 111 of the shaft 110 and on the other side on the bottom of body 121 with an external nut 502 to fasten the shaft 110 and the body 120 together.

The valve discs arrangement 200 comprises a first valve disc 210 and a second valve disc 220. The first and the second valve disc, 210 and 220, of the valve discs arrangement 200 comprise respective flow portions forming flow paths for guiding the air through the valve. The valve housing 100 comprises a rotatable shaft 110 and a body 120. The first disc 210 is non-rotatable mounted to the shaft 110 and the second disc 220 is non-rotatable mounted to the body 120.

The functional head 311 touches surface of the boss 111 and the surface of the through boring of the body 120. The external thread bolt 320 will be surrounded by spring 700 as a resilient means which is positioned in between the first valve disc 210 and the boss 111 of the shaft 110. This spring is located and effective to push the discs arrangement 200 towards the body 120 and the shaft 110 in order to establish the sealing, preferably air tight relationship between the valve discs arrangement 200 and the housing 100.The valve discs arrangement 200 is pivoted with an air gap 212 between the pin with head and the first disc 210 and an air gap 222 between the pin with head 310 and the second disc 222.

The ring elements 611 and 612 act like a soil proofing of the external thread bolt 320 in the valve housing 100. The ring element 612 is adapted to the boss 111 of the shaft 110 next to the head 311 and the ring element 611 is adapted in the body. An airtight closure of this preferred embodiment with the inventive pin with head is guaranteed. Sealing elements are functional integrated in the pneumatic valve device 1000, for example an adapted ring element of shaft 620 between shaft and body, an adapted sealing element 630 between the second disc 220 and the body 120 the adapted sealing elements 640 a, b and c for the sealing between the first disc 210 and the second disc 220.

The body 110 shows an air supply support 1. The air supply support 1 is an air tight sealing contact with the second valve disc 120 and in fluid communication with air passage 225 of the second valve disc 220, also with air passage/flow portion 215 of the first disc 210 depending on the rotatable position The air supply support 1also comprises a connecting port 431 adapted for connection to a source of pressurized air 430.

In this preferred embodiment the shaft 110 and the body 120 have clearance / guiding parts 113 such in that way that they are movable relative into the other and have a plugged up end position. The claws 112 of the shaft 110 are responsible for the mounting of the first disc 210 to the shaft 110 ensuring in that the first disc 210 is driven by rotation of the shaft 110.

The advantage of the embodiment is the simplifying of the assembly of the pneumatic valve device 1000 by a reliable constructive element like an external nut 502 for fastening the housing 100 outside of the housing.

### List of references (Part of the description)

- 1: air supply support
- 11: first fluid channel
- 12: second fluid channel
- 100: valve housing
- 110: shaft
- 111: boss
- 112: claws of shaft
- 113: clearance/ guiding part
- 120: body
- 121: bottom of body
- 200: valve discs arrangement
- 210: first disc
- 212: air gap 1
- 215: air passage/flow portion first disc
- 220: second disc
- 222: air gap 2
- 225: air passage second disc
- 300: mechanical fastener
- 310: pin with head
- 311: head
- 320: external thread bolt
- 400: utilization element
- 410: first utilization element
- 411: connecting port of 410
- 420: second utilization element
- 421: connecting port of 420
- 430: source of pressured air
- 431: connecting port of 430
- 500: fastening element
- 501: metal clip
- 502: nut
- 611: ring element 1
- 612: ring element 2
- 620: ring element of shaft
- 630: ring element between body and disc 2
- 640 a,b,c: sealing elements between disc1 and disc2
- 700: spring
- 800: lever arm
- 900: small screw
- 1000: pneumatic valve device

## Claims

1. A pneumatic valve device (1000) adapted to pass air between the valve and a utilization element (400), comprising a valve housing (100) and a rotatable valve discs arrangement (200), wherein
- the valve housing has a shaft (110) and a body (120), wherein a rotatable discs arrangement (200) has at least two valve discs (210, 220) and wherein the first rotatable disc (210) is fixed to the shaft (110) and the second rotatable disc (220) is fixed to the body (120) and wherein the shaft (110) and the body (120) are rotatable to each other with respect to the rotational direction of the rotatable discs arrangement (200), and
- the body (120) and the shaft (110) are movable relative into the other and have a plugged up end position, **characterized in that**
- the shaft (110) and the body (120) are held without axial movement by a single mechanical fastener (300), wherein the shaft (110) and the body (120) are held only by the single mechanical fastener (300).

2. A pneumatic valve device (1000) according to claim 1 wherein the single mechanical fastener (300) defines the rotatable axis of the rotary disc system (200).

3. A pneumatic valve device (1000) according to claim 1 or 2 wherein the single mechanical fastener (300) is fixed by the boss (111) of the shaft (110) and with at least one fastening element (500).

4. A pneumatic valve device (1000) according to one of the claims 1 to 3 wherein a spring (700) of the device is positioned in between the first valve disc (210) and the boss (111) of the shaft (110).

5. A pneumatic valve device (1000) according to one of the claims 1 to 4 wherein the single mechanical fastener (300) integrates a construction element for the lever arm (800) **characterized by** a pin with head (310).

## Patentansprüche

1. Eine pneumatische Ventileinrichtung (1000) ausgebildet zum Weiterleiten von Luft zwischen dem Ventil und einem Anwendungselement (400), aufweisend ein Ventilgehäuse (100) und eine drehbare Ventilscheibenanordnung (200), wobei
- das Ventilgehäuse einen Schaft (110) und einen Körper (120) aufweist, wobei eine drehbare Scheibenanordnung (200) mindestens zwei Ventilscheiben (210, 220) umfasst und wobei die erste drehbare Scheibe (210) an dem Schaft (110) befestigt ist und die zweite drehbare Scheibe (220) an dem Körper (120) befestigt ist und wobei der Schaft (110) und der Körper (120) drehbar zueinander in Bezug auf die Drehrichtung der drehbaren Scheibenanordnung (200) sind, und
- der Körper (120) und der Schaft (110) relativ ineinander bewegbar sind und eine aufgesteckte Endposition haben, **dadurch gekennzeichnet, dass**
- der Schaft (110) und der Körper (120) ohne axiale Bewegung von einem einzelnen mechanischen Befestiger (300) gehalten sind, wobei der Schaft (110) und der Körper (120) nur von dem einzelnen mechanischen Befestiger (300) gehalten sind.

2. Eine pneumatische Ventileinrichtung (1000) nach Anspruch 1, wobei der einzelne mechanische Befestiger (300) die drehbare Achse des Drehscheibensystems (200) definiert.

3. Eine pneumatische Ventileinrichtung (1000) nach Anspruch 1 oder 2, wobei der einzelne mechanische Befestiger (300) von dem Ansatz (111) des Schafts (110) und mit mindestens einem Befestigungselement (500) befestigt ist.

4. Eine pneumatische Ventileinrichtung (1000) nach einem der Ansprüche 1 bis 3, wobei eine Feder (700) der Einrichtung zwischen der ersten Ventilscheibe (210) und der Nabe (111) des Schafts (110) positioniert ist.

5. Eine pneumatische Ventileinrichtung (1000) nach einem der Ansprüche 1 bis 4, wobei der einzelne mechanische Befestiger (300) ein Konstruktionselement für den Hebelarm (800), **gekennzeichnet durch** einen Bolzen mit Kopf (310), integriert.

## Revendications

1. Dispositif (1000) de soupape pneumatique conçu pour faire passer de l'air entre la soupape et un élément (400) d'utilisation, comprenant une boîte (100) de soupape et un agencement (200) de disque de soupape tournant, dans lequel
- la boîte de soupape a un arbre (110) et un corps (120), l'agencement (200) de disque tournant ayant au moins deux disques (210, 220) de soupape et le premier disque (210) tournant est fixé à l'arbre (110), tandis que le deuxième disque (220) tournant est fixé au corps (102) et l'arbre (110) et le corps (120) peuvent tourner l'un par rapport à l'autre dans le sens de rotation de l'agencement (200) de disque tournant et
- le corps (120) et l'arbre (110) sont mobiles l'un par rapport à l'autre et ont une position d'extrémité enfichée, **caractérisé en ce que**
- l'arbre (110) et le corps (120) sont maintenus, sans déplacement axial, par une fixation (300) mécanique unique, l'arbre (110) et le corps (120) étant maintenus seulement par la fixation (300) mécanique unique.

2. Dispositif (1000) de soupape pneumatique suivant la revendication 1, dans lequel la fixation (300) mécanique unique définit l'axe tournant du système (200) de disque tournant.

3. Dispositif (1000) de soupape pneumatique suivant la revendication 1 ou 2, dans lequel la fixation (300) mécanique unique est fixée par le moyeu (111) de l'arbre (110) et par au moins un élément (500) de fixation.

4. Dispositif (1000) de soupape pneumatique suivant l'une des revendications 1 à 3, dans lequel un ressort (700) du dispositif est placé entre le premier disque (210) de la soupape et le moyeu (111) de l'arbre (110).

5. Dispositif (1000) de soupape pneumatique suivant l'une des revendications 1 à 4, dans lequel la fixation (300) mécanique unique intègre un élément de construction pour le bras (800) de levier, **caractérisé par** une broche ayant une tête (310).
